# EUROPÄISCHE PATENTSCHRIFT

(11) **EP 1 424 152 B1**
(45) Veröffentlichungstag und Bekanntmachung des Hinweises auf die Patenterteilung: **17.01.2007**
(21) Anmeldenummer: 03104443.1
(22) Anmeldetag: 28.11.2003
(51) Int. Cl.: B23B 31/11, B23B 51/04, F16D 1/09

(54) **Werkzeugaufnahme für Kernbohrkronen**
Tool holding device for core drills
Porte-outil pour outils de carottage

(30) Priorität: 30.11.2002 DE 10256043
(43) Veröffentlichungstag der Anmeldung: 02.06.2004
(73) Patentinhaber: HILTI Aktiengesellschaft, 9494 Schaan (LI)
(72) Erfinder: Gaul, Hans-Dieter, 86156, Augsburg (DE)
(74) Vertreter: Wildi, Roland

(56) Entgegenhaltungen:
- EP-A- 0 713 740
- DE-A- 3 744 091
- DE-U- 9 408 297
- DE-U- 9 412 764
- US-A- 4 923 344

## Beschreibung

Die Erfindung bezeichnet eine Werkzeugaufnahme für den rein drehenden Antrieb von zugeordneten Bohrwerkzeugen, insbesondere Kernbohrkronen, sowie ein Einsteckende einer Kernbohrkrone. Eine Werkzeugaufnahme gemäß dem Oberbegriff des Anspruchs 1 und ein Einsteckende gemäß dem Oberbegriff des Anspruchs 10 sind aus der US-A-4 923 344 bekannt.

Werkzeugaufnahmen für übliche Kernbohrkronen mit Innengewinde, bspw. 1 1/4" - UNC oder PIXIE, weisen eine werkzeugseitige Axialanschlagfläche zur Axialverspannung auf. Nachteilig bei derartigen lösbaren Gewindeverbindungen, bspw. nach der US4911253, sind die mühsame Montage/Demontage sowie ein mögliches Verklemmen der Gewindeverbindung.

Die DE3744091 offenbart eine schnell montierbare / demontierbare Werkzeugaufnahme für eine zugeordnete Kernbohrkrone, die ein Innenkeilwellenprofil und zwei Innenkonusflächen aufweist. Die zugeordneten Einsteckenden der Kernbohrkronen führen zu einer unnötigen axialen Verlängerung des Gesamtsystems.

Die US4923344 offenbart eine schnell montierbare / demontierbare Werkzeugaufnahme für eine, mit einem speziellen Einschraubadapter mit einem werkstückseitigen Aussengewinde präparierte, Kernbohrkrone mit axial kurzem Einsteckende, die eine Keilwellenverzahnung zur Drehmomentübertragung und einen hohlen, frei drehbaren Innengewindeflansch zur axialen Verspannung aufweist, wobei die koaxiale Führung der Kernbohrkrone ausschliesslich durch kleinflächige axiale Ringstirnflächen erfolgt. Bei Kernbohrkronen grösseren Durchmessers ab 100 mm übersteigen die bei zweckentsprechender Benutzung auftretenden hohen Biegemomente über den relativ gering beabstandeten Ringstirnflächen die plastisch verformungsfrei zulässig aufnehmbaren Fliessgrenzen.

Die Aufgabe besteht in der Realisierung einer schnell montierbaren / demontierbaren Werkzeugaufnahme für eine Kernbohrkrone mit axial kurzem Einsteckende. Ein weiterer Aspekt besteht in der Realisierung von zugeordneten Kernbohrkronen sowie Adaptern zu anderen Kernbohrkronen und/oder Werkzeugaufnahmen.

Die Aufgabe wird durch die Merkmale der unabhängigen Ansprüche 1 und 10 gelöst. Vorteilhafte Weiterbildungen ergeben sich aus den Unteransprüchen.

Eine schnell montierbare bzw. demontierbare Werkzeugaufnahme für eine Kernbohrkrone weist einen hohlen, frei drehbaren Innengewindeflansch zur axialen Verspannung, ein koaxiales Führungsmittel und ein Drehmomentübertragungsmittel auf, wobei dem werkzeugseitig endseitigen Führungsmittel maschinenseitig axial beabstandet eine sich werkzeugseitig verjüngende Aussenkonusfläche zugeordnet und zwischen beiden das Drehmomentübertragungsmittel angeordnet ist (vgl. Anspruch 1).

Durch die vom Führungsmittel axial beabstandete Aussenkonusfläche ist bei einer schnell montierbaren / demontierbaren Werkzeugaufnahme für eine Kernbohrkrone mit axial kurzem Einsteckende ein hohes Biegemoment ohne Überschreitung der Fliessgrenze des Führungsmittels oder der Aussenkeilfläche aufnehmbar.

Vorteilhaft ist das Führungsmittel als endseitige Aussenzylindermantelfläche ausgebildet, wodurch bei umfänglich flächigen Kontakt ein axialer Freiheitsgrad besteht, welcher zur Verspannung nutzbar ist.

Vorteilhaft liegt der axiale Konuswinkel der Aussenkonusfläche im Bereich von 10° bis 15°, weiter vorteilhaft 12,5°, wodurch neben der Ausbildung eines zweiten flächigen Kontakts zur koaxialen Führung eine klemmfreie reibkraftschlüssige Verspannung erzielt wird.

Vorteilhaft liegt der axiale Abstand zwischen den axialen Mitten des Führungsmittels und der Aussenkonusfläche im Bereich von 25 mm bis 50 mm, weiter vorteilhaft bei 35 mm, wodurch der axiale Abstand etwa im Bereich der Durchmesser des Führungsmittels von vorteilhaft 24,5 mm und des Aussenkonus von vorteilhaft 38 mm liegt und somit die bezüglich des Biegemoments wirksame, relative Diagonale maximiert ist.

Vorteilhaft ist das Drehmomentübertragungsmittel als Kerbverzahnung ausgebildet, wodurch dieses vorteilhaft herstellbar ist, insbesondere fliesspresstechnisch.

Vorteilhaft weist der Innengewindeflansch ein Rundgewinde auf, weiter vorteilhaft ein linksgängiges im Durchmesser von 55 mm, wodurch bei einer üblicherweise rechtsdrehenden Kernbohrkrone eine schmutzunempfindliche Verbindung erzielbar ist.

Vorteilhaft ist die Werkzeugaufnahme koaxial hohl, wodurch in Verbindung mit einer ebenfalls hohlen Antriebswelle durch diese Spülmittel in das Innere der Kernbohrkrone einleitbar ist.

Vorteilhaft ist die Werkzeugaufnahme durch einen demontierbaren spezifischen Werkzeugaufnahmenadapter ausgebildet, wodurch dieser an Werkzeugmaschinen mit spezifischen Werkzeugaufnahmen adaptierbar ist.

Vorteilhaft weist der Werkzeugaufnahmenadapter zwei axial beabstandete, sich jeweils maschinenseitig verjüngende, Aussenkonusflächen und eine axial dazwischen angeordnete Keilwelle auf, wodurch dieser an Standardwerkzeugaufnahmen adaptierbar ist.

Ein der Werkzeugaufnahme passend zugeordnetes Einsteckende einer Kernbohrkrone weist einen Aussengewindeflansch zur axialen Verspannung, ein koaxiales Führungsmittel und ein Drehmomentübertragungsmittel auf, wobei dem werkzeugseitig endseitigen Führungsmittel maschinenseitig axial beabstandet eine sich werkzeugseitig verjüngende Innenkonusfläche zugeordnet und zwischen beiden das Drehmomentübertragungsmittel angeordnet ist (vgl. Anspruch 10).

Vorteilhaft ist das Führungsmittel als endseitige Innenzylindermantelfläche ausgebildet, wodurch bei umfänglich flächigen Kontakt ein axialer Freiheitsgrad besteht, welcher zur Verspannung nutzbar ist.

Vorteilhaft liegt der axiale Konuswinkel der Innenkonusfläche im Bereich von 10° bis 15°, weiter vorteilhaft 12,5°, wodurch neben der Ausbildung eines zweiten flächigen Kontakts zur koaxialen Führung eine klemmfreie reibkraftschlüssige Verspannung erzielt wird.

Vorteilhaft liegt der axiale Abstand zwischen den axialen Mitten des Führungsmittels und der Innenkonusfläche im Bereich von 25 mm bis 50 mm, weiter vorteilhaft bei 35 mm, wodurch der axiale Abstand etwa im Bereich der Durchmesser des Führungsmittels von vorteilhaft 24,5 mm und des Innenkonus von vorteilhaft 38 mm liegt und somit die bezüglich des Biegemoments wirksame, relative Diagonale maximiert ist.

Vorteilhaft ist das Drehmomentübertragungsmittel als Innenkerbverzahnung ausgebildet, wodurch diese vorteilhaft herstellbar ist, insbesondere fliesspresstechnisch.

Vorteilhaft weist der Aussengewindeflansch ein Rundgewinde auf, weiter vorteilhaft ein linksgängiges im Durchmesser von 55 mm, wodurch hohe Verspannkräfte erzielbar sind.

Vorteilhaft ist das Einsteckende koaxial hohl, wodurch in Verbindung mit einer ebenfalls hohlen Kernbohrkrone durch diese Spülmittel in das Innere einleitbar ist.

Vorteilhaft ist das Einsteckende der Kernbohrkrone durch einen demontierbaren spezifischen Einsteckendenadapter ausgebildet, wodurch dieser an Kernbohrkronen mit spezifischen Einsteckenden adaptierbar ist.

Vorteilhaft weist der Einsteckendenadapter werkzeugseitig ein Aussengewinde auf, weiter vorteilhaft ein M41x2 Gewinde wodurch der Adapter an derartige Standardkernbohrkronen adaptierbar ist.

Die Erfindung wird bezüglich eines vorteilhaften Ausführungsbeispiels näher erläutert mit:
Fig. 1 als Werkzeugaufnahme / Einsteckenden - System im Teillängsschnitt
Fig. 2 als Werkzeugaufnahmenadapter / Einsteckendenadapter - System im Teillängsschnitt

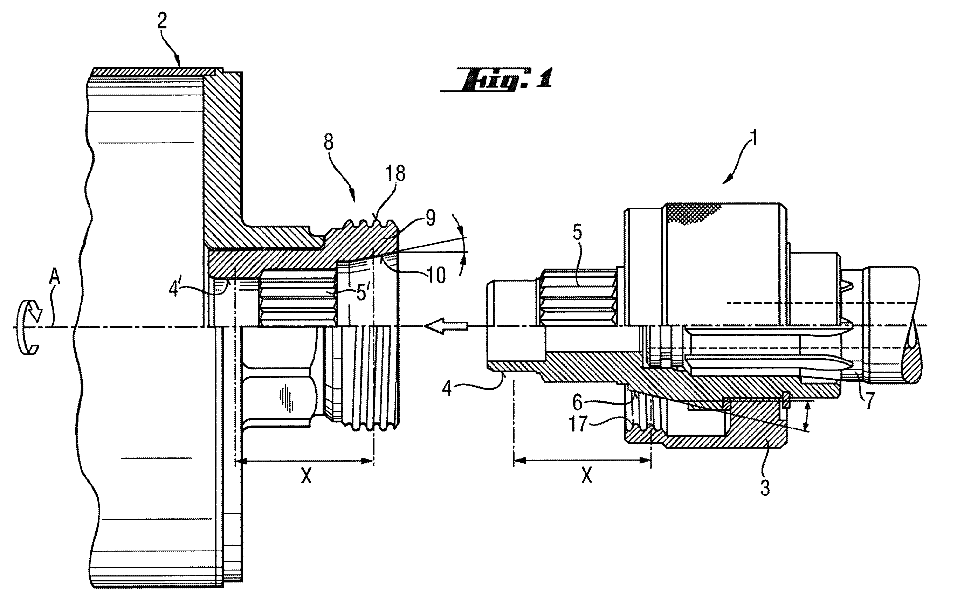

Nach Fig. 1 weist eine schnell montierbare / demontierbare, koaxial hohle Werkzeugaufnahme 1 für eine Kernbohrkrone 2 einen hohlen, frei drehbaren Innengewindeflansch 3 mit einem linksgängigen Rundgewinde 17 zur Verspannung längs der Drehachse A, ein koaxiales, als endseitige Außenzylindermantelfläche ausgebildetes, Führungsmittel 4 und ein als Kerbverzahnung ausgebildetes Drehmomentübertragungsmittel 5 auf. Dem werkzeugseitig endseitigen Führungsmittel 4 ist maschinenseitig axial beabstandet eine sich werkzeugseitig im Konuswinkel α verjüngende Aussenkonusfläche 6 zugeordnet und zwischen beiden das Drehmomentübertragungsmittel 5 angeordnet. Die Werkzeugaufnahme 1 selbst ist auf einer drehangetriebenen hohlen Getriebewelle 7 über eine nicht dargestellte Hohlschraube drehfest montierbar. Das im Werkzeugaufnahme / Einsteckenden - System der Werkzeugaufnahme 1 passend zugeordnete, koaxial hohle Einsteckende 8, welches fest in die Kernbohrkrone 2 eingelötet ist, weist einen Aussengewindeflansch 9 zur axialen Verspannung, ein koaxiales, als endseitige Innenzylindermantelfläche ausgebildetes, Führungsmittel 4' und ein als Kerbverzahnung ausgebildetes Drehmomentübertragungsmittel 5' auf. Dem werkzeugseitig endseitigen Führungsmittel 4' ist maschinenseitig axial beabstandet eine sich werkzeugseitig verjüngende Innenkonusfläche 10 zugeordnet und zwischen beiden das Drehmomentübertragungsmittel 5' angeordnet. Der axiale Konuswinkel α der zugeordneten Innenkonusfläche 10 sowie der Aussenkonusfläche 6 beträgt 12,5. Der axiale Abstand X zwischen den axialen Mitten des Führungsmittels 4' vom Durchmesser 24,5 mm und der Innenkonusfläche 10 vom mittleren Durchmesser 38 mm bzw. zwischen den axialen Mitten des Führungsmittels 4 und der Aussenkonusfläche 6 beträgt 35 mm. Der Aussengewindeflansch 9 weist wie der zugeordnete Innengewindeflansch 3 ein linksgängiges Rundgewinde 18 im Durchmesser von 55 mm auf.

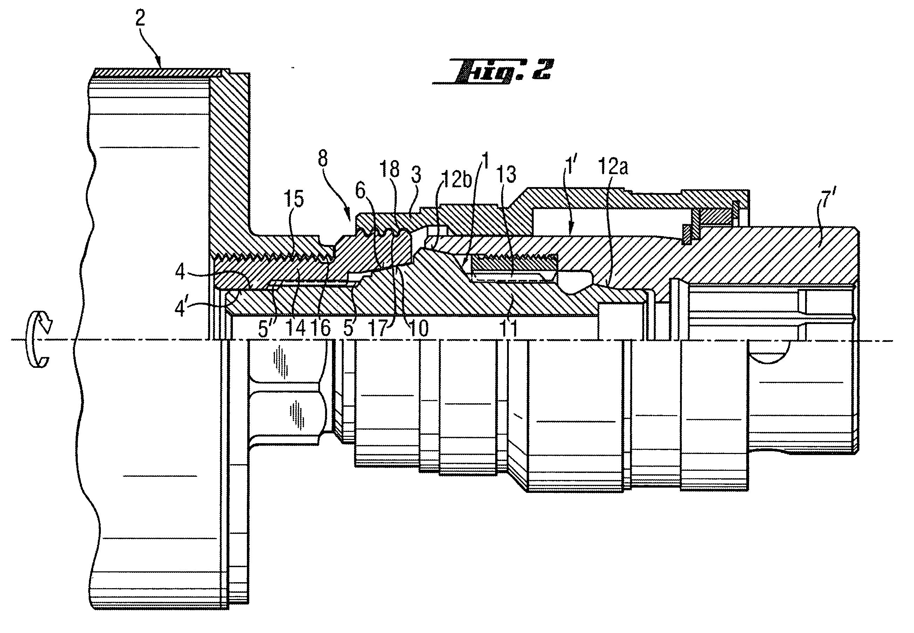

Nach Fig. 2 ist die Werkzeugaufnahme 1 der werkzeugseitige Teil eines demontierbaren spezifischen Werkzeugaufnahmenadapters 11, der an einer drehangetriebenen hohlen Getriebewelle 7' mit einer spezifischen Werkzeugaufnahme 1' adaptiert ist. Der Werkzeugaufnahmenadapter 11 weist maschinenseitig zwei axial beabstandete, sich jeweils maschinenseitig verjüngende, Aussenkonusflächen 12a, 12b und eine axial dazwischen angeordnete Keilwelle 13 auf. Das Einsteckende 8 der Kernbohrkrone 2 ist durch einen demontierbaren spezifischen Einsteckendenadapter 14 ausgebildet, welcher werkzeugseitig ein M41x2 Aussengewinde 15 aufweist, welcher in ein M41x2 Innengewinde 16 der Kernbohrkrone 2 adaptiert ist.

## Patentansprüche

1. Werkzeugaufnahme zur schnellen Montage bzw. Demontage einer Kernbohrkrone (2) mit einem hohlen, frei drehbaren Innengewindeflansch (3) zur axialen Verspannung, einem koaxialen Führungsmittel (4) und einem Drehmomentübertragungsmittel (5), **dadurch gekennzeichnet, dass** dem werkzeugseitig endseitigen Führungsmittel (4) maschinenseitig axial beabstandet eine sich werkzeugseitig verjüngende Aussenkonusfläche (6) zugeordnet und zwischen beiden das Drehmomentübertragungsmittel (5) angeordnet ist.

2. Werkzeugaufnahme nach Anspruch 1, **dadurch gekennzeichnet, dass** das Führungsmittel (4) als endseitige Aussenzylindermantelfläche ausgebildet ist.

3. Werkzeugaufnahme nach Anspruch 1 oder 2, **dadurch gekennzeichnet, dass** der axiale Konuswinkel (α) der Aussenkonusfläche (6) im Bereich von 10° bis 15°, optional bei 12,5° liegt.

4. Werkzeugaufnahme nach einem der vorherigen Ansprüche, **dadurch gekennzeichnet, dass** der axiale Abstand (X) zwischen den axialen Mitten des Führungsmittels (4) und der Aussenkonusfläche (6) im Bereich von 25 mm bis 50 mm, optional bei 35 mm liegt.

5. Werkzeugaufnahme nach einem der vorherigen Ansprüche, **dadurch gekennzeichnet, dass** das Drehmomentübertragungsmittel (5) als Kerbverzahnung ausgebildet ist.

6. Werkzeugaufnahme nach einem der vorherigen Ansprüche, **dadurch gekennzeichnet, dass** der Innengewindeflansch (3) ein Rundgewinde aufweist, optional ein linksgängiges Rundgewinde (17) im Durchmesser von 55 mm.

7. Werkzeugaufnahme nach einem der vorherigen Ansprüche, **dadurch gekennzeichnet, dass** sie koaxial hohl ist.

8. Werkzeugaufnahme nach einem der vorherigen Ansprüche, **dadurch gekennzeichnet, dass** sie durch einen demontierbaren spezifischen Werkzeugaufnahmenadapter (11) ausgebildet ist.

9. Werkzeugaufnahme nach Anspruch 8, **dadurch gekennzeichnet, dass** der Werkzeugaufnahmenadapter (11) zwei axial beabstandete, sich jeweils maschinenseitig verjüngende, Aussenkonusflächen (12a, 12b) und eine axial dazwischen angeordnete Keilwelle (13) aufweist.

10. Einsteckende einer Kernbohrkrone (2) zur Aufnahme in eine Werkzeugaufnahme (1) mit einem Aussengewindeflansch (9) zur axialen Verspannung, einem koaxialen Führungsmittel (4') und einem Drehmomentübertragungsmittel (5'), **dadurch gekennzeichnet, dass** dem werkzeugseitig endseitigen Führungsmittel (4') maschinenseitig axial beabstandet eine sich werkzeugseitig verjüngende Innenkonusfläche (10) zugeordnet und zwischen beiden das Drehmomentübertragungsmittel (5') angeordnet ist.

11. Einsteckende nach Anspruch 10, **dadurch gekennzeichnet, dass** das Führungsmittel (4') als endseitige Innenzylindermantelfläche ausgebildet ist.

12. Einsteckende nach Anspruch 10 oder 11, **dadurch gekennzeichnet, dass** der axiale Konuswinkel (α) der Innenkonusfläche (10) im Bereich von 10° bis 15°, optional bei 12,5° liegt.

13. Einsteckende nach einem der Ansprüche 10 bis 12, **dadurch gekennzeichnet, dass** der axiale Abstand (X) zwischen den axialen Mitten des Führungsmittels (4') und der Innenkonusfläche (10) im Bereich von 25 mm bis 50 mm, optional bei 35 mm liegt.

14. Einsteckende nach einem der Ansprüche 10 bis 13, **dadurch gekennzeichnet, dass** das Drehmomentübertragungsmittel (5') als Innenkerbverzahnung ausgebildet ist.

15. Einsteckende nach einem der Ansprüche 10 bis 14, **dadurch gekennzeichnet, dass** der Aussengewindeflansch (9) ein Rundgewinde, optional ein linksgängiges Rundgewinde (18) im Durchmesser von 55 mm aufweist.

16. Einsteckende nach einem der Ansprüche 10 bis 15, **dadurch gekennzeichnet, dass** es koaxial hohl ist.

17. Einsteckende nach einem der Ansprüche 10 bis 16, **dadurch gekennzeichnet, dass** es durch einen demontierbaren spezifischen Einsteckendenadapter (14) ausgebildet ist.

18. Einsteckende nach Anspruch 17, **dadurch gekennzeichnet, dass** der Einsteckendenadapter (14) werkzeugseitig ein Aussengewinde (15), optional ein M41x2 Gewinde aufweist.

## Claims

1. Tool holder for quick assembly and disassembly of a core drill bit (2), with a hollow, freely rotatable, internally threaded flange (3) for axial tightening, a coaxial guide means (4) and a torque transmission means (5), **characterized in that** an outer conical face (6) tapering towards the tool is assigned to, and axially distanced from, the tool end of the guide means (4), and the torque transmission means (5) is arranged between the two.

2. Tool holder according to Claim 1, **characterized in that** the end of the guide means (4) is formed as a cylindrical outer surface.

3. Tool holder according to Claim 1 or Claim 2, **characterized in that** the axial cone angle (α) of the outer conical face (6) lies in the range of 10° to 15° and is optionally about 12.5°.

4. Tool holder according to any one of the preceding claims, **characterized in that** the axial distance (X) between the axial centres of the guide means (4) and the outer conical face (6) lies in the range of 25 mm to 50 mm and is optionally about 35 mm.

5. Tool holder according to any one of the preceding claims, **characterized in that** the torque transmission means (5) is in the form of a serration.

6. Tool holder according to any one of the preceding claims, **characterized in that** the internally threaded flange (3) has a rounded thread, optionally a left-hand rounded thread (17) with a diameter of 55 mm.

7. Tool holder according to any one of the preceding claims, **characterized in that** it is coaxially hollow.

8. Tool holder according to any one of the preceding claims, **characterized in that** it takes the form of a removable specific tool holder adapter (11).

9. Tool holder according to Claim 8, **characterized in that** the tool holder adapter (11) has two outer conical faces (12a, 12b), axially spaced apart and each tapering towards the machine, and a splined shaft (13) arranged axially between them.

10. Chucking end of a core drill bit (2) for insertion into a tool holder (1), with an externally threaded flange (9) for axial tightening, a coaxial guide means (4') and a torque transmission means (5'), **characterized in that** an inner conical face (10) tapering towards the tool is assigned to, and axially distanced from, the tool end of the guide means (4'), and the torque transmission means (5') is arranged between the two.

11. Chucking end according to Claim 10, **characterized in that** the end of the guide means (4') is formed as a cylindrical inner surface.

12. Chucking end according to Claim 10 or Claim 11, **characterized in that** the axial cone angle (α) of the inner conical face (10) lies in the range of 10° to 15° and is optionally about 12.5°.

13. Chucking end according to any one of Claims 10 to 12, **characterized in that** the axial distance (X) between the axial centres of the guide means (4') and the inner conical face (10) lies in the range of 25 mm to 50 mm and is optionally about 35 mm.

14. Chucking end according to any one of Claims 10 to 13, **characterized in that** the torque transmission means (5') is in the form of an inner serration.

15. Chucking end according to any one of Claims 10 to 14, **characterized in that** the externally threaded flange (9) has a rounded thread, optionally a left-hand rounded thread (18) with a diameter of 55 mm.

16. Chucking end according to any one of Claims 10 to 15, **characterized in that** it is coaxially hollow.

17. Chucking end according to any one of Claims 10 to 16, **characterized in that** it takes the form of a removable specific chucking end adapter (14).

18. Chucking end according to Claim 17, **characterized in that** the tool end of the chucking end adapter (14) has an external thread (15), optionally an M41x2 thread.

## Revendications

1. Raccord d'outil pour le montage, respectivement le démontage rapides d'une couronne de carottage (2), comprenant une bride creuse à filetage intérieur en libre rotation (3) pour le serrage axial, un moyen de guidage coaxial (4) et un moyen de transmission de couple (5), **caractérisé en ce qu'**une surface conique extérieure (6) se rétrécissant côté outil est associée, à distance axiale côté machine, au moyen de guidage (4) situé à l'extrémité de l'outil et le moyen de transmission de couple (5) est disposé entre eux.

2. Raccord d'outil selon la revendication 1, **caractérisé en ce que** le moyen de guidage (4) est conformé en surface périphérique extérieure extrême cylindrique.

3. Raccord d'outil selon la revendication 1 ou 2, **caractérisé en ce que** l'angle de conicité axiale (α) de la surface conique extérieure (6) est compris entre 10° et 15° et est optionnellement de 12,5°.

4. Raccord d'outil selon une des revendications précédentes, **caractérisé en ce que** la distance axiale (X) entre le milieu axial du moyen de guidage (4) et celui de la surface conique extérieure (6) est comprise entre 25 mm et 50 mm et est optionnellement de 35 mm.

5. Raccord d'outil selon une des revendications précédentes, **caractérisé en ce que** le moyen de transmission de couple (5) est conformé en dentelure.

6. Raccord d'outil selon une des revendications précédentes, **caractérisé en ce que** la bride à filetage intérieur (3) comporte un filet rond, optionnellement un filet rond à pas à gauche (17) d'un diamètre de 55 mm.

7. Raccord d'outil selon une des revendications précédentes, **caractérisé en ce qu'**il est coaxialement creux.

8. Raccord d'outil selon une des revendications précédentes, **caractérisé en ce qu'**il est constitué par un adaptateur de raccord d'outil spécifique démontable (11) .

9. Raccord d'outil selon la revendication 8, **caractérisé en ce que** l'adaptateur de raccord d'outil (11) comporte deux surfaces coniques extérieures distantes axialement (12a, 12b) qui se rétrécissent chacune côté machine et un arbre cannelé (13) disposé axialement entre elles.

10. Extrémité d'insertion d'une couronne de carottage (2) à loger dans un raccord d'outil (1), comprenant une bride à filetage extérieur (9) pour le serrage axial, un moyen de guidage coaxial (4') et un moyen de transmission de couple (5'), **caractérisée en ce qu'**une surface conique intérieure (10) se rétrécissant côté outil est associée, à distance axiale côté machine, au moyen de guidage (4') situé à l'extrémité de l'outil et le moyen de transmission de couple (5') est disposé entre eux.

11. Extrémité d'insertion selon la revendication 10, **caractérisée en ce que** le moyen de guidage (4') est conformé en surface périphérique intérieure extrême cylindrique.

12. Extrémité d'insertion selon la revendication 10 ou 11, **caractérisée en ce que** l'angle de conicité axiale (α) de la surface conique intérieure (10) est compris entre 10° et 15° et est optionnellement de 12,5°.

13. Extrémité d'insertion selon une des revendications 10 à 12, **caractérisé en ce que** la distance axiale (X) entre le milieu axial du moyen de guidage (4') et celui de la surface conique intérieure (10) est comprise entre 25 mm et 50 mm et est optionnellement de 35 mm.

14. Extrémité d'insertion selon une des revendications 10 à 13, **caractérisée en ce que** le moyen de transmission de couple (5') est conformé en dentelure intérieure.

15. Extrémité d'insertion selon une des revendications 10 à 14, **caractérisée en ce que** la bride à filetage extérieur (9) comporte un filet rond, optionnellement un filet rond à pas à gauche (18) d'un diamètre de 55 mm.

16. Extrémité d'insertion selon une des revendications 10 à 15, **caractérisé en ce qu'**elle est coaxialement creuse.

17. Extrémité d'insertion selon une des revendications 10 à 16, **caractérisée en ce qu'**elle est constituée par un adaptateur d'extrémité d'insertion spécifique démontable (14).

18. Extrémité d'insertion selon la revendication 17, **caractérisée en ce que** l'adaptateur d'extrémité d'insertion (14) comporte, côté outil, un filetage extérieur (15), optionnellement un filetage M41x2.
